# EUROPEAN PATENT APPLICATION

(11) **EP 4 796 805 A1**
(43) Date of publication of application: **26.08.2026**
(21) Application number: 25382148.2
(22) Date of filing: 19.02.2025
(51) Int. Cl.: F16D 65/00

(54) **PARTICLE RETENTION SYSTEM FOR BRAKING SYSTEMS**

(71) Applicant: Icer Brakes, S.A., 31002 Pamplona (Navarra) (ES)
(72) Inventor: URDIAIN GOÑI, Adrian, 31002 PAMPLONA (Navarra) (ES)
(74) Representative: Herrero & Asociados, S.L.

(57) **Abstract**

The particle retention system (1) for braking systems comprises an outer shell (2); and a particle filter (5); wherein it also comprises one or more magnets (4) arranged between the outer shell (2) and the particle filter (5).

It permits to provide a particle retention system for braking systems that allows free air circulation around the brake disc and does not directly interfere with braking, without influencing it.

## Description

### Object of the invention

The present invention relates to a particle retention system for braking systems, which allows reducing environmental pollution and thus improving people's health.

### Background of the invention

Vehicle braking systems generate suspended particles because of the wear of friction components, such as brake pads and discs in disc brake systems, or shoes and drums in drum brake systems.

These particles, mainly composed of heavy metals and other harmful compounds, represent a significant source of air pollution and can negatively affect both human health and the environment.

Currently, there are various solutions known to mitigate the emission of these particles. One of them involves the use of filters designed to capture the particles released during braking. These filters are usually installed in proximity to the brake caliper, acting as a barrier to prevent the dispersion of particles into the environment. This solution may have an unbalanced suspended weight issue that could affect driving. Furthermore, there may be problems with insufficient ventilation in the braking system, because of how close the filter is to the disc, considering that a good portion of the heat generated during braking is dissipated through the disc.

Another known solution involves the use of vacuum absorption systems, in which a suction mechanism captures the particles generated during braking. This solution may cause particle driving problems due to braking actuation issues that may arise when the absorption pump is activated.

Despite these advances, there is still a need for a more efficient particle retention system that reduces pollutant emissions without affecting the braking system's performance or significantly increasing maintenance costs or integration complexity in vehicles.

### Disclosure of the invention

Therefore, an objective of the present invention is to provide a particle retention system for braking systems that allows free air circulation around the brake disc and does not directly interfere with braking, without influencing it.

With the particle retention system for braking systems of the invention said disadvantages are solved, presenting other advantages that will be described below.

The particle retention system for braking systems in accordance with the present invention is described in claim 1, and the dependent claims include additional features that are optional.

Specifically, the particle retention system for braking systems comprises:
- an outer shell;
- a particle filter; and
- one or several magnets arranged between the outer shell and the particle filter.

In addition, the outer shell preferably includes protrusions arranged on its outer perimeter for fitting into complementary housings on a vehicle wheel rim.

According to a preferred embodiment, the protrusions are arranged on the outer perimeter of the outer shell at equal distances.

In addition, the particle retention system according to the present invention also preferably includes a fixing cover for securing the outer shell.

According to a preferred embodiment, one or more magnets are fixed to the outer shell by an adhesive, and are made of neodymium or samarium.

On the other hand, the particle filter is preferably attached to one or more magnets by an adhesive.

Advantageously, the outer shell, the particle filter, and/or one or more magnets have a ring shape to be placed inside a vehicle wheel rim.

According to a preferred embodiment, the outer shell is made of plastic or metal, and the fixing cover is made of aluminum sheet.

The particle retention system according to the present invention facilitates the collection of dust particles coming from the braking system, as it allows them to be placed radially towards the disc, which is the position where the dust generated during braking tends to be evacuated.

Furthermore, since the system is symmetrical, it can be easily balanced, just like a rim, being able to be balanced at the same time as the rim. This helps make it a system that does not affect driving.

Furthermore, the addition of a magnet between the shell and the filter further helps to capture brake dust. This dust is composed of a wide variety of different materials, brake pad material and disc material. This causes these particles to become magnetic.

### Brief description of the drawings

For better understanding of what has been disclosed, some drawings in which, schematically and only by way of a non-limiting example, a practical case of embodiment is shown.

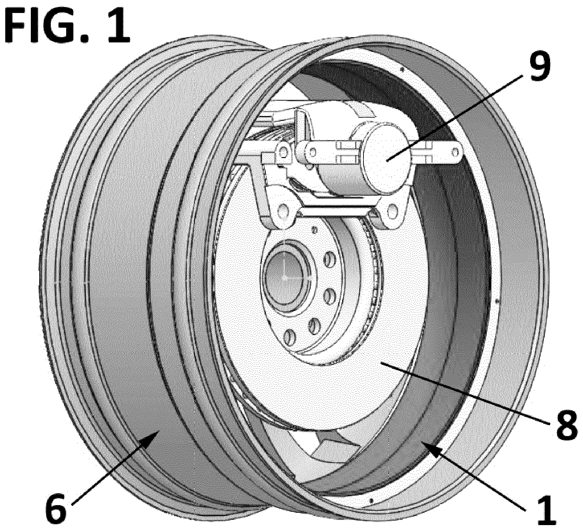

Figure 1 is a perspective view of the particle retention system according to the present invention mounted inside a rim of a vehicle wheel, the wheel being equipped with a braking system; and

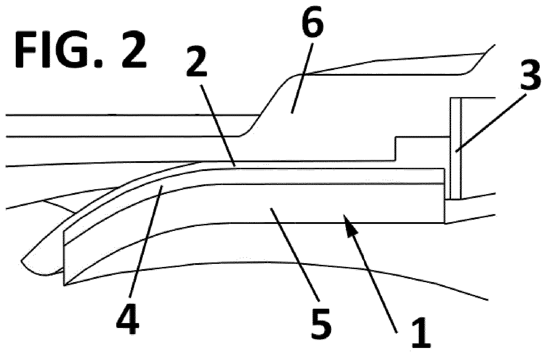

Figure 2 is a perspective section view of a part of the particle retention system according to the present invention.

### Description of a preferred embodiment

Next, a preferred embodiment of the particle retention system according to the present invention is described, with reference to the attached drawings.

The particulate retention system (1) is designed to capture and retain the particles generated during the braking process of a vehicle, and comprises an outer shell (2), a fixing cover (3), one or more magnets (4), and a particle filter (5), all of these elements preferably having a ring shape to fit inside a rim (6) of a vehicle wheel.

The outer shell (2) constitutes the main structure of the system, providing housing for the other components and serving as a means of attachment to the vehicle's rim (6).

Preferably, the outer shell (2) is made of a lightweight and resistant material, such as polycarbonate or aluminum sheet. For its coupling to the rim (6), the outer shell (2) comprises a series of protrusions (7), for example, arranged equidistant along the outer perimeter of the shell (2), which fit into corresponding housings of the rim (6), ensuring its proper fixation.

In order to prevent the detachment of the shell (2) due to transverse forces, for example, when taking a curve, the system also includes a fixing cover (3), which consists, for example, of an aluminum sheet or light alloy that is attached to the rim (6) using screws, rivets, adhesives, welding, or any suitable means.

The fixing cover (3) prevents the shell (2) from moving out of position during vehicle use, especially in high-demand situations, such as cornering.

Inside the shell (2) there is a magnet (4) or a set of magnets, whose function is to attract the metallic particles generated by the wear of the friction components of the braking system.

This magnet (4) is fixed to the shell (2), for example, by means of an adhesive resistant to high temperatures and vibrations. Preferably, the magnet (4) is made of neodymium or samarium, due to its high magnetic force, which allows it to capture a large percentage of metallic particles.

Adjacent to the magnet (4), a particle filter (5) is located, in the part of the system closest to the brake disc (8) and the brake caliper (9) of the braking system. The particle filter (5) is attached to the magnet (4), for example, by an adhesive and according to a preferred embodiment is designed to capture particles with a diameter smaller than 10 µm, preventing their dispersion in the environment.

It should be noted that the particle retention system (1) according to the present invention is designed as a removable unit, allowing for its periodic replacement along with the vehicle's brake pads.

The attachment of the retention system (1) to the rim (6) can be done using different methods, such as screws, riveting, adhesive, or any suitable method, ensuring its stability and allowing for easy installation and removal.

The design of the particle capture system may vary depending on the vehicle in which it is installed, optimizing its proximity to the brake caliper and brake disc assembly to maximize efficiency in particle retention.

Although reference has been made to specific embodiments of the invention, it is apparent to a person skilled in the art that the described particle retention system is susceptible of numerous variations and modifications, and that all the details mentioned can be replaced by other technically equivalents, without departing from the scope of protection defined by the appended claims.

## Claims

1. Particle retention system (1) for braking systems, comprising:
- an outer shell (2); and
- a particle filter (5);
**characterized in that** it also comprises one or more magnets (4) arranged between the outer shell (2) and the particle filter (5).

2. Particle retention system (1) according to claim 1, wherein the outer shell (2) comprises protrusions (7) arranged on its outer perimeter.

3. Particle retention system (1) according to claim 2, wherein the protrusions (7) are arranged on the outer perimeter of the outer shell (2) equidistantly.

4. Particle retention system (1) according to any one of the preceding claims, further comprising a fixing cover (3) for fixing the outer shell (2).

5. Particle retention system (1) according to claim 1, wherein the one or more magnets (4) are attached to the outer shell (2) by an adhesive.

6. Particle retention system (1) according to claim 1 or 5, wherein the one or more magnets (4) are made of neodymium or samarium.

7. Particle retention system (1) according to any one of the preceding claims, wherein the particle filter (5) is fixed to one or more magnets (4) by an adhesive.

8. Particle retention system (1) according to any one of the preceding claims, wherein the outer shell (2), the particle filter (5) and/or the one or more magnets (4) have a ring shape.

9. Particle retention system (1) according to any of the preceding claims, wherein the outer shell (2) is made of plastic or metal.

10. Particle retention system (1) according to claim 4, wherein the fixing cover (3) is made of aluminum sheet.
